(19) Europäisches Patentamt
European Patent Office
Office européen des brevets

(11) Veröffentlichungsnummer: **0 352 466**
A1

(12) **EUROPÄISCHE PATENTANMELDUNG**

(21) Anmeldenummer: 89111060.3

(51) Int. Cl.⁴: **B29C 51/26**

(22) Anmeldetag: 19.06.89

(30) Priorität: 23.07.88 DE 3825061

(43) Veröffentlichungstag der Anmeldung:
31.01.90 Patentblatt 90/05

(84) Benannte Vertragsstaaten:
AT BE CH DE ES FR GB GR IT LI LU NL SE

(71) Anmelder: MASCHINENFABRIK GEORG GEISS
18, Sudetenstrasse
D-8601 Sesslach(DE)

(72) Erfinder: Geiss, Manfred, Dipl.-Ing.
Obere Bergstrasse 13
D-8601 Sesslach(DE)

(74) Vertreter: Metzler, Jürgen, Dipl.-Ing.
Ketschendorfer Strasse 76
D-8630 Coburg(DE)

(54) Vakuumformmaschine.

(57) Es handelt sich um eine Vakuumformmaschine zur Herstellung von Kunststoffteilen aus Kunststoffolien oder -platten. Die Vakuumformmaschine besteht im wesentlichen aus einem die Form tragenden Tisch (6), einem Spannrahmen (8) zum Halten des Kunststoffes und einem Oberstempel (9) für die mechanische Verformung. Der Tisch (6), der Spannrahmen (8) und der Oberstempel (9) sind vertikal, also in Höhenrichtung, verfahrbar und zu diesem Zweck mittels Kugelumlaufspindeln (10 bzw. 11) abgestützt und gehalten, die mit entsprechenden Kugelumlaufbuchsen oder -muttern zusammenwirken. Für den Antrieb der Spindeln bzw. Buchsen sind Servomotoren (15, 16) vorgesehen. Während die Spindeln (11) für den Oberstempel (9) und den Spannrahmen (8) fest angeordnet und die mit ihnen zusammenwirkenden Kugelumlaufbuchsen angetrieben sind, sind die angetriebenen Spindeln (10) des Tisches (6) drehbar gelagert und durchgreifen die im Tisch (6) integrierten Kugelumlaufbuchsen. Der Einsatz von Kugelumlaufspindeln und -buchsen erlaubt ein exaktes Steuern und Regeln von Verfahrwegen, Beschleunigungen und Geschwindigkeiten, wobei diese Parameter jederzeit reproduzierbar sind und sich in einfacher Weise auf einem Datenträger abspeichern lassen.

Fig.3

# Vakuumformmaschine

Die Erfindung betrifft eine Vakuumformmaschine zur Herstellung von Kunststoffteilen aus Kunststoffolien oder -platten mit wenigstens jeweils einem die Form tragenden Tisch, einem Spannrahmen zum Halten des Kunststoffes und einem Oberstempel, die jeweils in Höhenrichtung verfahrbar sind.

In Vakuumformmaschinen werden Kunststoffolien oder Kunststoffplatten zunächst durch Erwärmen in den thermoplastischen Zustand gebracht und dann unter Anlegen eines Vakuums entsprechend der eingelegten Form zum gewünschten Erzeugnis verformt. Eine Vakuumformmaschine weist verschiedene, jeweils vertikal, also in Höhenrichtung, verfahrbare Teile auf, nämlich den Tisch, der die Form trägt, den Spannrahmen, der den Kunststoff hält, und den Oberstempel, der eine mechanische Verformung erlaubt. Das Verfahren der einzelnen Teile erfolgt bei bekannten Vakuumformmaschinen durch Pneumatik- oder Hydraulikzylinder. Die immer komplizierter werdenden Umformungen setzen voraus, daß der Ablauf der Bewegungen der einzelnen Teile immer exakter reproduzierbar ist, d.h. die einzelnen Teile müssen exakt in ihre jeweils erforderliche Position wiederholbar gebracht werden. Dies ist jedoch bei der Pneumatik wegen der Kompressibilität der Luft nicht oder nur schwer möglich. Bei der Hydraulik steht dieser Forderung die notwendige komplexe Regelung entgegen. Eine exakte und jederzeit reproduzierbare Einstellung ist insbesondere bei einem sich wiederholenden, automatischen Taktablauf, wie er bei modernen Vakuumformmaschinen vorliegt, absolut notwendig, um zu einwandfreien Ergebnissen zu kommen.

Die Aufgabe der Erfindung besteht deshalb darin, die im Oberbegriff des Anspruches 1 angegebene Vakuumformmaschine insoweit zu verbessern, daß die jeweils in Höhenrichtung verfahr- und verlagerbaren Teile exakt und reproduzierbar in ihre jeweils erforderliche Position gebracht werden können, so daß ein exakt reproduzierbarer Bewegungsablauf erhalten und eingehalten wird.

Zur Lösung dieser Aufgabe sind bei der Erfindung die im kennzeichnenden Teil des Anspruches 1 angegebenen Merkmale vorgesehen. In den dem Anspruch 1 folgenden Ansprüchen sind noch für die Aufgabenlösung vorteilhafte und förderliche Weiterbildungen beansprucht.

Bei der erfindungsgemäßen Vakuumformmaschine sind also zum Verfahren und exakten Positionieren des Tisches, des Spannrahmens und des Oberstempels Kugelumlaufspindeln und Kugelumlaufbuchsen bzw. -muttern als Bewegungselemente vorgesehen. Diese Teile sind somit in zusammenwirkenden Kugelumlaufspindeln und -buchsen gehalten und abgestützt, die einen exakten und reproduzierbaren Bewegungsablauf ermöglichen. Dabei sind aufgrund der reibungsarmen Wälzlagerung verhältnismäßig geringe Kräfte erforderlich. Der Antrieb der Spindeln bzw. Buchsen oder Muttern erfolgt durch Servomotoren. Als Leistungs- bzw. Kraftübertragungsmittel sind vorzugsweise Zahnriemen vorgesehen. Der Einsatz von Kugelumlaufspindeln und -buchsen erlaubt ein exaktes Steuern und Regeln von Verfahrwegen, Beschleunigungen und Geschwindigkeiten. Diese Parameter sind bei sich wiederholendem, automatischem Taktablauf jederzeit reproduzierbar. Außerdem ergibt sich die einfache Möglichkeit, alle für den Bewegungsablauf notwendigen Parameter auf einem Datenträger abzuspeichern, so daß sie jederzeit bei Bedarf abgerufen werden können. Hierdurch wird eine beträchtliche Vereinfachung im Produktionsablauf erreicht.

Die Erfindung wird nun anhand eines Ausführungsbeispiels im Zusammenhang mit der Zeichnung näher erläutert. Es zeigen:

Fig. 1 eine schematische Frontansicht der Vakuumformmaschine, z.T. auf- und abgebrochen dargestellt,

Fig. 2 eine Draufsicht auf die Vakkummformmaschine,

Fig. 3 eine Seitenansicht der Vakuumformmaschine und

Fig. 4 in vergrößerter abgebrochener Schnittdarstellung eine Kugelumlaufspindel mit Kugelumlaufbuchse bzw. -mutter.

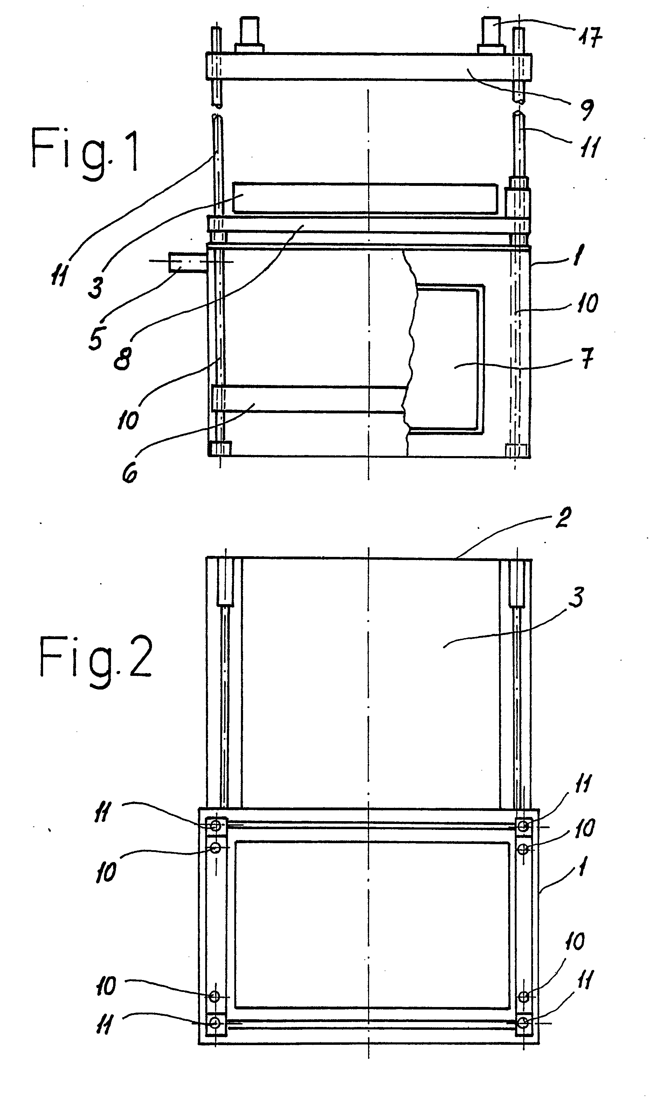

Die in den Fig. 1 bis 3 gezeigte Vakuumformmaschine besteht im wesentlichen aus dem Hauptgehäuse bzw. Ständer 1 und dem Anbau 2. Der Anbau 2 trägt die Oberheizung 3, die vom Motor 4 angetrieben wird, und nimmt die nicht weiter gezeigte Unterheizung auf, deren Antrieb durch den Motor 5 erfolgt. Mittels der Motoren 4 und 5 werden die Ober- und Unterheizung taktweise in das Hauptgehäuse 1 geschoben, um die zu verformenden Kunststoffplatten zu erwärmen und zu plastifizieren.

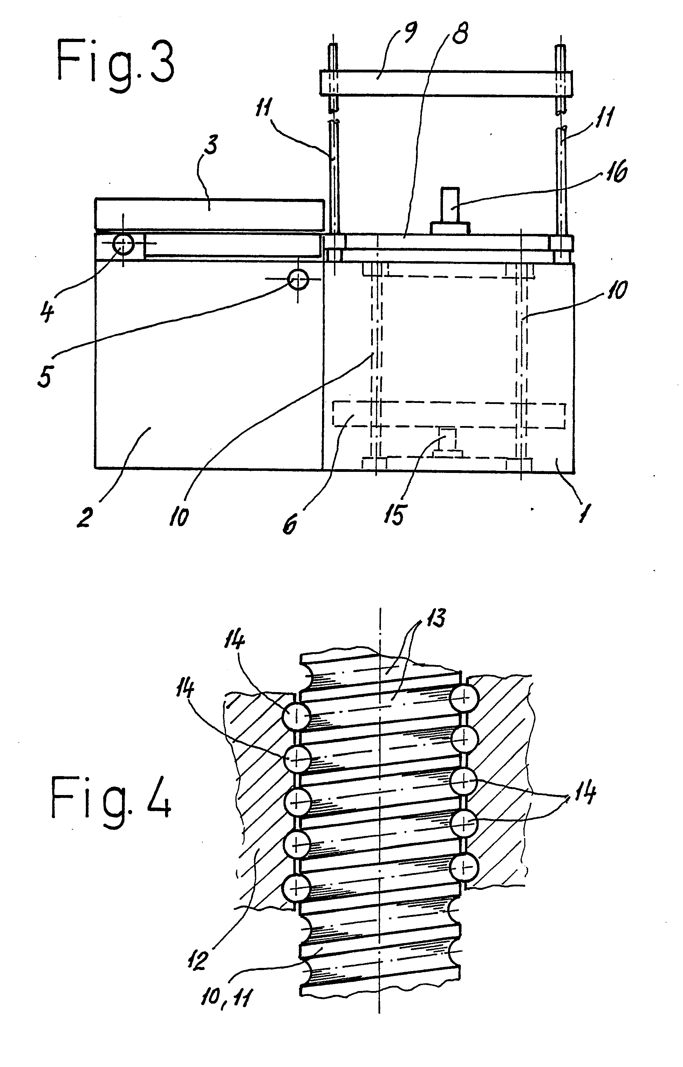

Innerhalb des Hauptgehäuses 1 ist der Tisch 6 angeordnet, der die nicht weiter gezeigte Form trägt. Um an die im Inneren des Hauptgehäuses 1 angeordneten Elemente gelangen zu können, ist noch eine Fronttüre 7 vorgesehen. Des weiteren trägt das Hauptgehäuse bzw. der Ständer 1 den Spannrahmen 8, der den Kunststoff hält. Schließlich ist noch ein Oberstempel 9 vorgesehen, mit dem die Verformung der Kunststoffplatte bzw. der Kunststoffolie vorgenommen wird. Der Tisch 6, der Spannrahmen 8 und der Oberstempel 9 sind jeweils vertikal, also in Höhenrichtung, verfahrbar. Zu diesem Zweck sind Tisch 6 sowie Spannrahmen 8 und Oberstempel 9 mittels der Kugelumlaufspindeln 10 bzw. 11 abgestützt und gehalten, die mit entsprechenden Kugelumlaufbuchsen oder -muttern zusammenwirken. In Fig. 4 ist im vergrößerten Maßstab beispielsweise eine derartige Kugelumlaufspindel 10, 11 mit der Kugelumlaufbuchse 12 gezeigt, wobei die Kugelumlaufspindel 10 bzw. 11 mit schraubenförmigen Laufbahnen 13 ausgestattet ist, in denen die kugeligen Wälzkörper 14 der Kugelumlaufbuchse 12 ablaufen. Die Spindeln 10, 11 und die Buchsen 12 bilden also die Bewegungselemente für die in Höhenrichtung verfahrbaren Teile, nämlich den Tisch 6, den Spannrahmen 8 und den Oberstempel 9. Es sind insgesamt vier Spindeln 10 in vertikaler Ausrichtung angeordnet, die dem Tisch 6 zugeordnet sind und diesen abstützen. Die weiterhin angeordneten vier gleichfalls vertikal ausgerichteten Spindeln 11 nehmen den Spannrahmen 8 und den Oberstempel 9 auf. Jeweils integriert in den Tisch 6, dem Spannrahmen 8 und dem Oberstempel 9 sind die Kugelumlaufbuchsen 12, die in Fig. 1 bis 3 nicht weiter dargestellt sind. Diese Kugelumlaufbuchsen 12 werden jeweils von den Spindeln 1o und 11 durchgriffen, wie in Fig. 4 gezeigt ist.

Zum Verfahren der einzelnen in Höhenrichtung verfahrbaren Teile sind Motoren angeordnet, die als Servomotoren ausgebildet sind. Zum Antrieb des Tisches 6 dient der Tischmotor 15, der Spannrahmen 8 wird durch den Motor 16 bewegt und für die Vertikalverlagerung des Oberstempels 9 ist der Motor 17 vorgesehen. Der Tischmotor 15 treibt die drehbar gelagerten Spindeln 10 an, so daß der Tisch 6 exakt positioniert angehoben bzw. abgesenkt wird. Die Spindeln 11 für den Spannrahmen 8 und den Oberstempel 9 sind drehfest angeordnet, während die Motoren 16 bzw. 17 die Kugelumlaufbuchsen 12 des Spannrahmens 8 bzw. des Oberstempels 9 antreiben, so daß eine vertikale Verlagerung des Spannrahmens 8 und des Oberstempels 9 unabhängig voneinander möglich ist. Als Übertragungsmittel zwischen den Motoren 15, 16 und 17 und den zugehörigen Spindeln bzw. Kugelumlaufbuchsen sind Zahnriemen (nicht weiter gezeigt) vorgesehen.

Durch den Einsatz von Kugelumlaufspindeln und Kugelumlaufbuchsen ist ein exakt reproduzierbares Verfahren und Positionieren der einzelnen verfahrbaren Teile möglich, so daß auch komplizierteste Umformungen möglich sind. Es ist eine Abspeicherung der Daten auf Datenträgern möglich, so daß das exakte Positionieren als CNC-Steuerung durchführbar ist.

**Ansprüche**

1. Vakuumformmaschine zur Herstellung von Kunststoffteilen aus Kunststoffolien oder -platten mit wenigstens jeweils einem die Form tragenden Tisch, einem Spannrahmen zum Halten des Kunststoffes und einem Oberstempel für die mechanische Verformung, die jeweils in Höhenrichtung verfahrbar sind, dadurch gekennzeichnet, daß zum Verfahren und exakten Positionieren des Tisches (6), des Spannrahmens (8) und des Oberstempels (9) Kugelumlaufspindeln (10, 11) und Kugelumlaufbuchsen bzw. -muttern (12) als Bewegungselemente vorgesehen sind.

2. Vakuumformmaschine nach Anspruch 2, dadurch gekennzeichnet, daß dem Oberstempel (9) und dem Spannrahmen (8) gemeinsam dieselben Spindeln (11) und dem Tisch (6) besondere Spindeln (10) zugeordnet sind.

3. Vakuumformmaschine nach Anspruch 1 oder 2, dadurch gekennzeichnet, daß die den Oberstempel (9) und den Spannrahmen (8) abstützenden Spindeln (11) fest angeordnet und die mit ihnen zusammenwirkenden, im Oberstempel (9) und Spannrahmen (8) integrierten Kugelumlaufbuchsen (12) angetrieben sind, während die den Tisch (6) haltenden Spindeln (10) drehbar gelagert und angetrieben sind und die im Tisch integrierten Kugelumlaufbuchsen (12) durchgreifen.

4. Vakuumformmaschine nach einem oder mehreren der Ansprüche 1 bis 3, dadurch gekennzeichnet, daß für den Antrieb der Spindeln (10) bzw. der Kugelumlaufbuchsen (12) Servomotoren (15, 16, 17) vorgesehen sind.

5. Vakuumformmaschine nach Anspruch 4, dadurch gekennzeichnet, daß als Kraftübertragungsmittel zwischen den Servomotoren (15, 16, 17) und den Spindeln (10) bzw. Kugelumlaufbuchsen (12) Zahnriemen angeordnet sind.

Fig.1

Fig.2

Fig. 3

Fig. 4

Europäisches
Patentamt

# EUROPÄISCHER RECHERCHENBERICHT

## EINSCHLÄGIGE DOKUMENTE

EP 89111060.3

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | <u>DE - A1 - 3 223 171</u><br>(ADOLF ILLIG MASCHINENBAU)<br>* Fig. 5 *<br>-- | 1-5 | B 29 C 51/26 |
| Y | <u>DE - A1 - 3 513 388</u><br>(SCHENK)<br>* Fig. 1 *<br>-- | 1-5 | |
| Y | <u>DE - A1 - 3 308 149</u><br>(ALTHAUS)<br>* Fig. *<br>-- | 1-5 | |
| Y | <u>DE - A1 - 2 805 141</u><br>(DEUTSCHE STAR KUGELHALTER GMBH)<br>* Fig. 1 *<br>---- | 1-5 | |

RECHERCHIERTE
SACHGEBIETE (Int. Cl.4)

B 29 C
F 16 C
F 16 H

Der vorliegende Recherchenbericht wurde für alle Patentansprüche erstellt.

| Recherchenort | Abschlußdatum der Recherche | Prüfer |
|---|---|---|
| WIEN | 06-10-1989 | REININGER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82